# NEW EUROPEAN PATENT SPECIFICATION

(11) **EP 3 423 700 B2**
(45) Date of publication and mention of the opposition decision: **25.11.2026**
(45) Mention of the grant of the patent: 01.05.2024
(21) Application number: 17717252.5
(22) Date of filing: 03.03.2017
(51) Int. Cl.: F02M 21/02, F02M 21/06, F02D 19/02

(54) **GASEOUS FLUID CONDITIONING MODULE**
MODUL ZUR KONDITIONIERUNG VON GASFÖRMIGEN FLÜSSIGKEITEN
MODULE DE CONDITIONNEMENT DE FLUIDE GAZEUX

(30) Priority: 04.03.2016 CA 2922740; 08.11.2016 CA 2947835
(43) Date of publication of application: 09.01.2019
(73) Proprietor: Indopar B.V., 5657 ES Eindhoven (NL)
(72) Inventor: TEN BROEKE, Sebastiaan Martinus Emanuel, 5657 ES EINDHOVEN (NL); FAASSEN, Antonius Theodorus Adrianus, 5657 ES EINDHOVEN (NL); EXALTO, Ray Anthony, 5657 ES EINDHOVEN (NL); VISSCHER, Jeroen, 5657 ES EINDHOVEN (NL); VAN SWAM, Dave, 5657 ES EINDHOVEN (NL)
(74) Representative: Algemeen Octrooi- en Merkenbureau B.V.
(86) International application number: PCT/NL2017/050129
(87) International publication number: WO 2017/150978

(56) References cited:
- EP-A1- 0 121 028
- EP-A1- 2 573 438
- WO-A1-98/26168
- DE-C- 882 922
- GB-A- 2 457 350
- US-A- 5 584 467
- US-A- 5 615 655

## Description

### Field of the Invention

The present application relates to a conditioning module for gaseous fluids.

### Background of the Invention

Gaseous fluids are any fluids that are in the gas state at standard temperature and pressure, which in the context of this application is 21 degrees Celsius (°C) and 101.325 kilopascals (kPa) respectively. A subset or category of gaseous fluids has a critical temperature above standard temperature whereby these gaseous fluids can be stored in the liquid phase at standard temperature. Exemplary gaseous fluids in this category include propane (C₃H₈), which can be stored in liquid form at standard temperature and a pressure of approximately at least 859 kPa, and butane (C₄H₁₀), which can be stored in liquid form at standard temperature and a pressure of approximately at least 230 kPa. Liquefied petroleum gas (LPG) is a mixture of gaseous fluids, in particular hydrocarbon gases, that is also in this category. LPG is used as fuel in heating appliances, cooking equipment and vehicles. Varieties of LPG include mixtures that are primarily propane, primarily butane, and most commonly mixtures including both propane and butane. An example of a gaseous fluid not in this category is methane, which at standard temperature exists either in the gas phase or as a supercritical fluid depending on the pressure.

For internal combustion engine applications, LPG (also known as autogas in this circumstance) is stored in liquid form at ambient temperature in pressurized tanks. The LPG is delivered at tank pressure to an LPG pressure regulator that includes a heat exchanger for vaporizing the LPG from the liquid phase to the gas phase, and a pressure regulating valve for effectively regulating the pressure of LPG that is delivered to the fuel injectors at system pressure. The pressure regulating valve can be located upstream of the heat exchanger, in which case it directly regulates the pressure of the LPG in the liquid phase. Alternatively, it can be located downstream of the heat exchanger, in which case it directly regulates the pressure of the LPG in the gas phase. The pressure regulating valve has been a mechanical valve that increases system pressure by increasing the flow area through the valve ('opening' the valve) and decreases system pressure by decreasing the flow area through the valve ('closing' the valve). The actuation force on the valve is typically exerted by a balanced diaphragm/spring system, or alternatively, a balanced piston/spring system. Engine manifold pressure can also be applied to one side of this balanced system to introduce an additional measure of control. The flow of gaseous fuel through the LPG pressure regulator is stopped when the engine stops consuming fuel or when a shut-off valve closes the flow path.

For internal combustion engines that are fuelled with compressed natural gas (CNG) it is known to use two-stage pressure regulators. The CNG is stored in the gas phase at a relatively high pressure and needs to be reduced to a relatively low pressure for fuel injection. The two-stage pressure regulator includes a mechanical valve that drops tank pressure, for example from around 200 bar to 20 bar in a first stage, followed by an electronically actuated valve that regulates the pressure from 20 bar down to a value between 2 and 5 bar in a second stage. Input pressure on the first stage mechanical valve varies as the engine consumes fuel and tank pressure drops but the input pressure on the second stage remains substantially the same. Since the input pressure of the electronically operated valve is substantially constant and known, the input pressure can easily be compensated by a spring, thus simplifying the construction of the electronically actuated valve.

A typical maximum storage pressure for LPG can be an order of magnitude less than CNG, for example around 15 bar for LPG compared to 200 bar for CNG. For this reason two-stage pressure regulators are not typically employed for LPG and the input pressure to the LPG pressure regulator can vary, for example between 15 bar and 4 bar as the engine consumes fuel and dependent on LPG composition and temperature. Since the input pressure to the LPG pressure regulator can be relatively small (4 bar), the valve diameter of the pressure regulating valve needs to be relatively large to handle high flow requirements at low tank pressure. As an example, the valve diameter in the LPG pressure regulator can be around 10 millimeters (mm) compared to the valve diameter of the second stage electronically actuated valve in the CNG pressure regulator of around 3mm. For a variety of reasons it is much more difficult to control a large valve with varying input pressure compared to a relatively small valve with substantially constant input pressure. For this reason electronic pressure regulators are not commonly employed, if at all, in LPG applications.

United States patent 5,615,655, issued to Motohiro Shimizu on April 1, 1997 discloses a control system for an internal combustion engine that is fueled with LPG. There is a control valve that is formed by an electromagnetic proportional valve that controls the pressure of gaseous fuel (LPG) that is supplied to the engine to a predetermined constant value depending upon an amount of current applied to the control valve. The control valve includes an energizing section to electronically actuate a plunger that is displaced relative to an amount of current applied, and therefore the amount of gaseous fuel that flows out of the control valve is at a flow rate linearly proportional to the amount of current applied. The control valve also includes a spring biased and atmospherically-compensated mechanical valve that regulates the pressure of the gaseous fuel flowing out of the control to almost a constant value for a given applied current. Depending on the spring selected for the valve spring, the valve element is either blocking gaseous fuel flow from the inlet port to the outlet port over the range of input pressures, in which case the energizing section must work against a strong spring force to open the valve when tank pressure is low, or it is not blocking and gaseous fuel flows through even when the energizing section is de-energized. EP 121 028 A1 relates to a fuel injection system for injecting liquified petroleum gas into an air/fuel mixing chamber. EP 2 573 438 A1 relates to a pilot operated solenoid valve. EP 0 121 028 A1, DE 882 922 C, WO 98/26168 A1, US 5 615 655 A, GB 2 457 350 A and EP 2 573 438 A1 disclose other gaseous fuel conditioning devices.

The state of the art is lacking in techniques for regulating the pressure of gaseous fluids. The present method and apparatus provide a technique for improving the conditioning of gaseous fluids, such as LPG that is consumed by an internal combustion engine.

### Summary of the Invention

An improved gaseous fluid conditioning module includes a gaseous fluid inlet that receives a gaseous fluid at inlet pressure and a gaseous fluid outlet that provides the gaseous fluid in a gas phase within a predetermined pressure range. A valve apparatus regulates gaseous fluid flow between the gaseous fluid inlet and the gaseous fluid outlet thereby controlling outlet pressure. The valve apparatus includes a valve, an electromagnet and a compensation chamber. The valve includes a valve seat and a valve member reciprocatable with respect to the valve seat. The valve member is in fluid sealing contact with the valve seat when the valve is closed and spaced apart from the valve seat when the valve is open. The electromagnet is energizable to exert a force on the valve member to move the valve member away from the valve seat thereby opening the valve to regulate the pressure of gaseous fluid downstream from the valve within the predetermined pressure range. The compensation chamber is at a distal end of the valve member opposite the valve seat into which the valve member extends, and is in fluid communication with the gaseous fluid inlet. The gaseous fluid upstream of the valve exerts longitudinal forces on a first area of the valve member in the compensation chamber in the direction of the valve seat and longitudinal forces on a second area of the valve member outside the compensation chamber away from the valve seat. The longitudinal forces exerted on the first area of the valve member in the compensation chamber compensate the valve member against gaseous fluid inlet pressure.

In an exemplary embodiment, the compensation chamber overcompensates the valve member. The first area in the compensation chamber is larger than the second area, whereby the longitudinal forces exerted by the gaseous fluid upstream of the valve on the first area of the valve member are greater than the longitudinal forces exerted by the gaseous fluid on the second area of the valve member such that the valve closes when the electromagnet is de-energized.

The gaseous fluid conditioning module can include a mechanical biasing device urging the valve member to the valve seat. In another exemplary embodiment, the first area in the compensation chamber is equal to the second area, whereby the longitudinal forces exerted by the gaseous fluid on the first area of the valve member are equal to the longitudinal forces exerted by the gaseous fluid on the second area of the valve member such that the compensation chamber provides balanced-compensation of the valve member. In yet another exemplary embodiment, the first area in the compensation chamber is smaller than the second area, whereby the longitudinal forces exerted by the gaseous fluid on the first area of the valve member are less than the longitudinal forces exerted by the gaseous fluid on the second area of the valve member such that the compensation chamber under-compensates the valve member. The mechanical biasing device closes the valve member when the electromagnet is de-energized in the balanced and under compensated embodiments.

The gaseous fluid conditioning module includes a heat exchanger, in which circumstance the gaseous fluid can be received at the gaseous fluid inlet in the liquid phase. The heat exchanger includes a heat exchange fluid inlet, a heat exchange fluid outlet, a process fluid inlet and a process fluid outlet. A heat exchange fluid employed to increase the enthalpy of the gaseous fluid enters by way of the heat exchange fluid inlet, circulates through the heat exchanger and exits by way of the heat exchange fluid outlet. The process fluid inlet is in fluid communication with the gaseous fluid inlet, and the valve apparatus is downstream from the process fluid outlet.

The gaseous fluid conditioning module further includes a body and the heat exchanger further includes a tubular middle member within the body. The tubular middle member includes annular hollow ribs protruding radially outwardly and abutting an inside surface of the body thereby forming a plurality of annular passageways around the tubular middle member. The ribs are spaced apart from the inside surface of the body at an inlet region around the heat exchange fluid inlet, an outlet region around the heat exchange fluid outlet and a longitudinal region at a side substantially opposite the heat exchange fluid inlet and outlet. Heat exchange fluid flows from the heat exchange fluid inlet into and through the annular passageways encompassed by the inlet region, then into and through a longitudinal passageway at the longitudinal region, then into and through the annular passageways encompassed by the outlet region and then into the heat exchange fluid outlet.

The heat exchanger further includes a spiral passageway extending between the process fluid inlet and the process fluid outlet. The spiral passageway increases in cross-sectional flow area in the direction of the process fluid outlet. There is an inner member within a tubular middle member. The inner member includes a rib protruding radially outwardly and spirally wound around the inner member. The rib abuts an inside surface of the tubular middle member forming the spiral passageway. The inner member tapers longitudinally in a step-wise manner such that the cross-sectional flow area of the spiral passageway increases in the direction of the process fluid outlet. The inner member can include a longitudinal bore at one end that can receive a tubular filter inserted therein. The gaseous fluid is in communication between the gaseous fluid inlet and the process fluid inlet through the filter.

In an exemplary embodiment the valve member includes a longitudinal passageway fluidly connecting the gaseous fluid inlet with the compensation chamber. An annular valve housing can reciprocatably support the valve member therein with a fluid seal between the valve member and the annular valve housing. An end cap fluidly seals an end of the annular valve housing opposite the valve seat. The compensation chamber is formed by the annular valve housing, the end cap, the valve member and the fluid seal, and gaseous fluid can only be communicated into and out of the compensation chamber by way of the longitudinal passageway in the valve member. The annular valve housing can have a small inner diameter portion and a large inner diameter portion and the fluid seal can be between the valve member and the annular valve housing in a region of the small inner diameter portion, and the end cap fluidly seals the end of the annular valve housing at the large inner diameter portion. The mechanical biasing device (for example, a spring) can be between the end cap and the valve member urging the valve member towards the valve seat.

The electromagnet can include an annular coil pack extending around the valve member. The electromagnet can be adjustably energized to adjust the flow area through the valve. The gaseous fluid conditioning module can include a receptacle in fluid communication with the gaseous fluid outlet that receives at least one of a pressure relief valve, a temperature sensor, a pressure sensor and a gaseous fluid conduit. The gaseous fluid can be any gaseous fluid or mixtures thereof having a critical temperature above 21 degrees Celsius. The gaseous fluid can be one of propane, butane, dimethyl ether, LPG and mixtures of these gaseous fluids.

An improved engine system includes a gaseous fluid storage apparatus; the improved gaseous fluid conditioning module fluidly connected to receive gaseous fluid from the gaseous fluid storage apparatus; an engine fluidly connected to receive gaseous fluid from and to supply engine coolant to the gaseous fluid conditioning module; a pressure sensor measuring gaseous fluid pressure between the gaseous fluid conditioning module and the engine; and a controller operatively connected with the gaseous fluid conditioning module, the engine and the pressure sensor and programmed to command the gaseous fluid conditioning module to regulate the gaseous fluid pressure between the gaseous fluid conditioning module and the engine within a predetermined pressure range; and to adjust the predetermined pressure range based on engine operating conditions.

### Brief Description of the Drawings

FIG. 1 is a perspective view of a gaseous fuel conditioning module according to a first embodiment.
FIG. 2 is a side-elevational, cross-sectional view of the gaseous fuel conditioning module of FIG. 1.
FIG. 3 is a side-elevational, cross-sectional view of the gaseous fuel conditioning module of FIG. 1.
FIG. 4 is an exploded view of the gaseous fuel conditioning module of FIG. 1.
FIG. 5 is side-elevational, cross-sectional view of an annular housing of the gaseous fuel conditioning module of FIG. 1.
FIG. 6 is partial-detail, cross-sectional view of a valve and a sealing diameter of a compensation chamber of the gaseous fuel conditioning module of FIG. 1.
FIG. 7 is a side-elevational, cross-sectional view of a gaseous fuel conditioning module according to a second embodiment.
FIG. 8 is a cross-sectional view of the gaseous fuel conditioning module of FIG. 7 illustrating the fluid path of gaseous fluid therethrough.
FIG. 9 is an engine system according to one embodiment employing the gaseous fluid conditioning module of FIG. 1.

### Detailed Description of Preferred Embodiment(s)

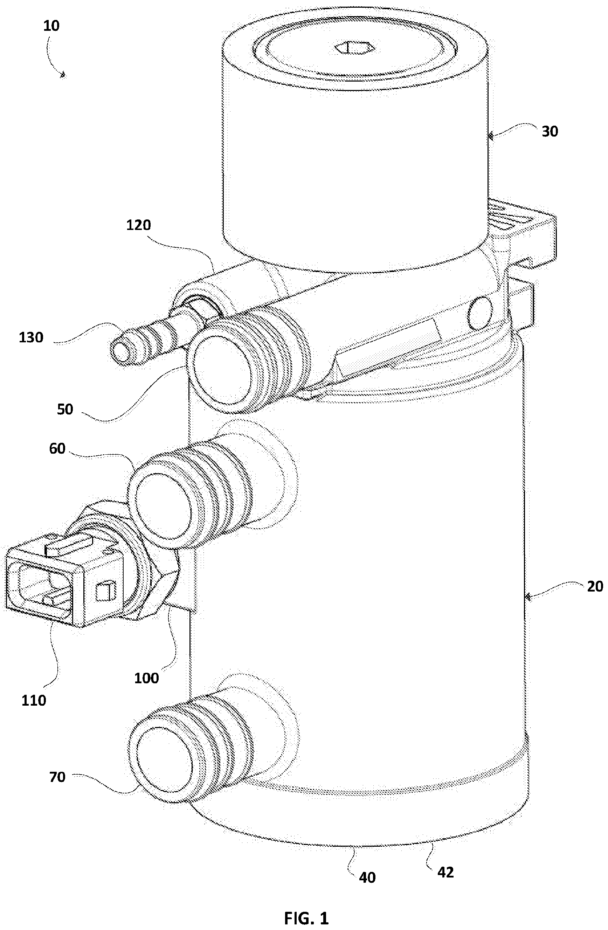

Referring to FIG. 1, there is shown gaseous fluid conditioning module 10 according to a first embodiment. Conditioning module 10 is the type that conditions the state (for example the phase and pressure) of a gaseous fluid that is received from a storage tank (not shown) in the liquid phase at tank pressure and delivered to an end use device (not shown) in the gas phase between a predetermined pressure range. The delivered pressure can be changed dynamically under control of a controller to command an outlet pressure between zero and storage tank pressure and/or pressure relief valve pressure (as will be described in more detail below). In an exemplary embodiment the gaseous fluid is a gaseous fuel and the end use device is an internal combustion engine. Conditioning module 10 includes a heat exchanger 20 that increases the enthalpy of the gaseous fluid for changing its phase, and an electromagnetic valve apparatus 30 for regulating the gaseous fluid output pressure. In the illustrated and exemplary embodiment, the heat exchanger 20 and valve apparatus 30 are part of a unitary module, however in other embodiments they can be in separate modules. Gaseous fluid in the liquid phase enters fluid inlet 40 (in end 42), undergoes a transition to the gas phase through heat exchanger 20, is reduced and regulated in pressure through electromagnetic valve apparatus 30, and exits fluid outlet 50 (in the gas phase) within the predetermined pressure range. Gaseous-fluid inlet pressure can be tank pressure or a delivery pressure of the gaseous fluid from a storage container or delivery means. Gaseous-fluid outlet pressure is also referred to as system pressure, and can be an injection pressure of fuel injectors of the engine. A heat exchange fluid, for example engine coolant from the internal combustion engine, enters through heat exchange fluid inlet 60 where it is fluidly communicated through heat exchanger 20 to increase the enthalpy of the gaseous fluid to facilitate the phase transition, and exits through heat exchange fluid outlet 70. In other embodiments the roles of fluid inlet 60 and fluid outlet 70 can be reversed, that is fluid outlet 70 can function as a fluid inlet and fluid inlet 60 can function as a fluid outlet.

Electromagnetic valve apparatus 30 is an electronic pressure regulator that includes an electrical input (not shown) for electrically connecting the valve apparatus with a driver (not shown). The driver energizes an electromagnet associated with a valve in the valve apparatus that will be described in more detail below. The driver can be associated with and under command of an electronic controller (not shown) that includes a control system and/or algorithms for adjusting the electrical current through the electromagnet to adjust the actuation of valve apparatus 30 to control the pressure of the gaseous fluid exiting fluid outlet 50 (in the gas phase). The controller can be configured to adjust the predetermined pressure range as a function of engine operating conditions, such as engine load, engine speed and inlet manifold pressure as well as other conventional parameters of internal combustion engines. Receptacle 100 receives temperature sensor 110 that generates signals representative of the temperature of the heat exchange fluid within conditioning module 10. In an exemplary embodiment temperature sensor 110 is operatively connected (for example, electrically connected) with the electronic controller such that the control system can monitor the temperature of the heat exchange fluid to reduce the likelihood of incomplete phase change of the gaseous fuel when the gaseous fluid exiting the heat exchanger is partially liquid and partially gas. Receptacle 120 receives pressure relief valve 130 that operates as a safety valve to maintain the system pressure at fluid outlet 50 within conditioning module 10 below a predetermined value in the event of an over pressure condition for which downstream components are not designed to handle. Alternatively, receptacle 120 can receive a pressure sensor generating signals representative of system pressure at fluid outlet 50, or a temperature sensor generating signals representative of gaseous fluid temperature at the fluid outlet, or a combination of the two sensors. Still further, a fluid conduit can be connected to receptacle 120 as a secondary fluid outlet.

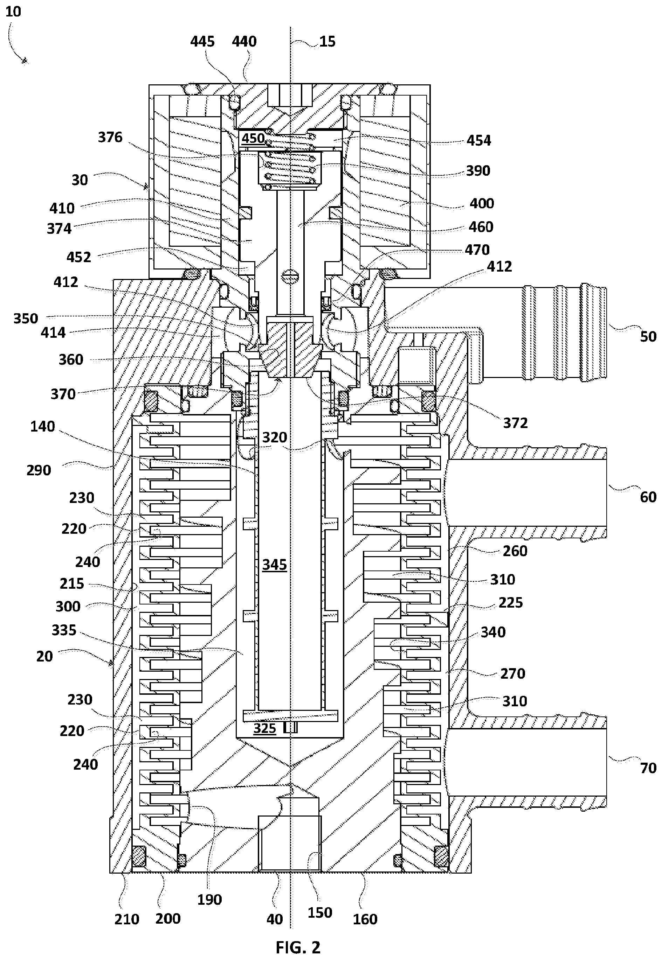

Referring now generally to FIGS. 2, 3 and 4, heat exchanger 20 of the conditioning module is described in more detail. Heat exchanger 20 includes inner member 160 disposed within tubular middle member 200 that is itself disposed within tubular body 210 of the conditioning module, all of which cooperate to control the flow of gaseous fluid and heat exchange fluid to within relatively close proximity of each other to facilitate heat rejection (that is, heat transfer) from the heat exchange fluid to the gaseous fluid. Middle member 200 includes a plurality of hollow, radially outwardly protruding ribs 220 that extend annularly around the perimeter of the middle member forming respective external recesses 230 and internal recesses 240. Ribs 220 are spaced apart from inner surface 215 of body 210 to allow heat exchange fluid to flow between body 210 and middle member 200. One of the ribs (herein labelled rib 225) is located between heat exchange fluid inlet 60 and outlet 70 and extends radially outwardly further than the other ribs 220 such that it abuts inner surface 215. Rib 225 extends annularly and partially around the circumference of inner surface 215 of body 210. In an exemplary embodiment rib 225 extends around substantially half the circumference of inner surface 215 substantially equidistantly on both sides of inlet 60 and outlet 70. Arc-shaped passageway 260 is fluidly connected to heat exchange fluid inlet 60 and is defined by body 210, middle member 200 and rib 225 and extends from inlet 60 along the extent of rib 225. Arc-shaped passageway 270 is fluidly connected to heat exchange fluid outlet 70 and is defined by body 210, middle member 200 and rib 225 and extends along the extent of rib 225 towards outlet 70. Longitudinal passageway 300 connects passageway 260 with passageway 270 around rib 225. In operation, heat exchange fluid enters inlet 60 and flows along passageway 260 between middle member 200 and body 210. Rib 225 directs the heat exchange fluid around the circumference of inner surface 215 of the body towards side 290 where it flows through longitudinal passageway 300 and back along passageway 270 around the circumference towards and through outlet 70. As the heat exchange fluid flows through passageways 260, 270 and 300 it flows through external recesses 230. The structural elements of heat exchanger 20 that influence the flow of gaseous fluid (also known as process fluid with respect to the heat exchanger) are now discussed.

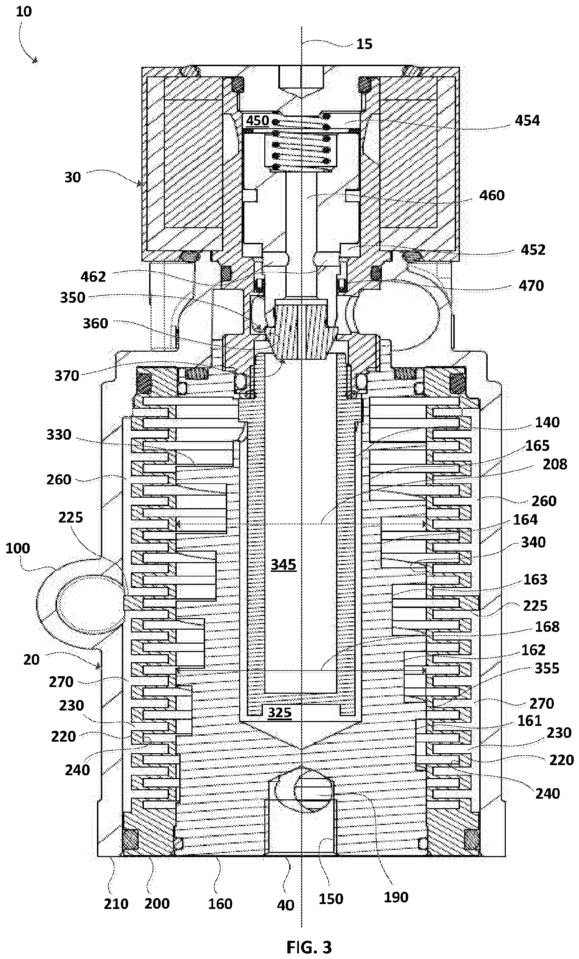

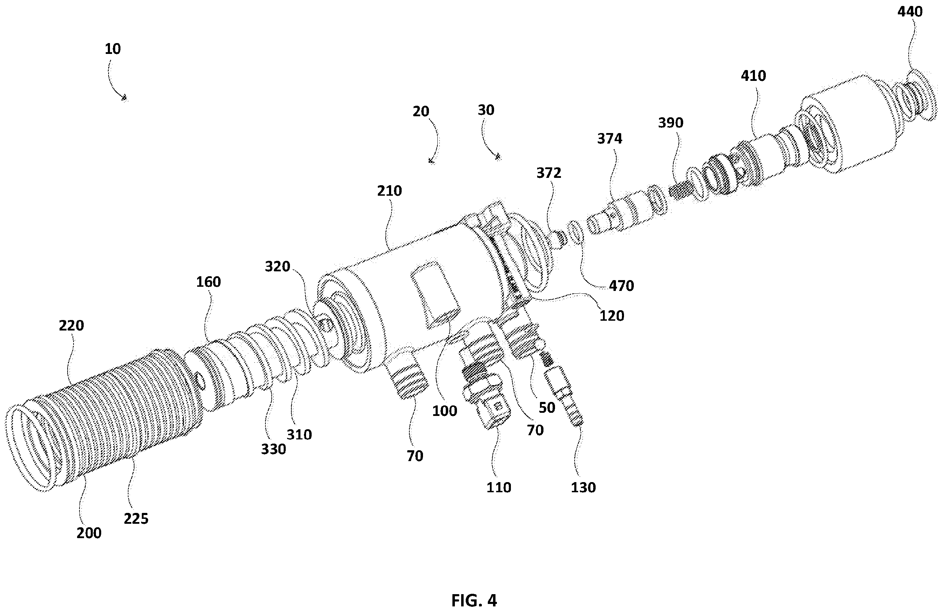

Spiral passageway 310 is defined by the cooperation of inner member 160, middle member 200 and spiral rib 330 (best seen in FIGS. 3 and 4). Spiral rib 330 protrudes radially outwardly from inner member 160 abutting inner surface 340 of middle member 200, and spirally winds around the inner member thereby forming spiral passageway 310. To ensure that rib 300 abuts inner surface 340, middle member 200 is shrink-fit onto inner member 160. Outer diameter 168 of inner member 160 is slightly larger (for example, 0.06 millimeters) than inner diameter 208 of middle member 200 measured at room temperature (defined to be 20 degrees Celsius herein). During assembly of heat exchanger 20, middle member 200 is heated (for example to between 200 and 300 degrees Celsius) such that inner diameter 208 increases greater than outer diameter 168 of inner member 160 whereby the inner member can be inserted inside the middle member. The middle member is then allowed to cool such that inner diameter 208 decreases towards its original diameter whereby the middle member constricts on inner member 160 forming a strong shrink-fit bond. The shrink-fit bond between inner member 160 and middle member 200 improves heat transfer therebetween, from the heat exchange fluid to the gaseous fluid in spiral passageway 310.

Without the shrink-fit bond there can be gaps between spiral rib 330 and inner surface 340 (for example at location 355 seen in FIG. 3) that increase the thermal resistance therebetween, which reduces the transfer of heat from the heat exchange fluid to the gaseous fluid. This causes inner member 160 to cool down and shrink, which in turn increases the gap(s) and allows even further reduced heat transfer. This process can be detrimental to the capacity of heat exchanger 20, particularly with low temperature gaseous fuels, such as low temperature LPG. By shrink-fitting middle member 200 onto inner member 160 the performance and capacity of heat exchanger 20 improves compared to not shrink-fitting. Shrink-fitting reduces and preferably eliminates the formation of gaps between spiral rib 330 and inner surface 340.

Gaseous fluid flows through spiral passageway way 310 (that includes internal recesses 240) from process fluid inlet 190 to process fluid outlets 320. Inner member 160 is tapered longitudinally, as can be seen by the decreasing diameters for surfaces 161, 162, 163, 164 and 165 respectively, such that the cross-sectional flow area of spiral passageway 310 increases from process fluid inlet 190 to process fluid outlet 320. Gaseous fluid begins to transition from the liquid phase to the gas phases as soon as the temperature and pressure conditions along the path of gaseous fluid from the storage tank to fluid outlet 70 cause such a transition, which can be near fluid inlet 40 where the temperature can begin to increase, and along passageway 310 as its enthalpy increases when in close proximity with the heat exchange fluid. The increasing cross-sectional area of passageway 310 provides expansion space for the gaseous fluid as it transitions to the gas phase, reducing both the stress experienced within conditioning module 10 due to expanding gases and the back pressure that may result from an unintentional pressure restriction orifice along the spiral passageway. The overlapping external and internal recesses 230 and 240 respectively of ribs 220 in middle member 200 increase the surface area between the heat exchange fluid and the gaseous fuel increasing the heat transfer therebetween. The structural elements of conditioning module 10 that influence the flow of gaseous fluid between heat exchanger 20 and electromagnetic valve apparatus 30 are now discussed.

Inner member 160 includes hollow core 325 in the form of a bore. Process fluid outlets 320 are in the form of bores (seen in FIGS. 2 and 4) that extend into hollow core 325. Cylindrical filter 140 extends through hollow core 325 forming annular passageway 335. Gaseous fluid flows through process fluid outlets 320 into hollow core 325, along annular passageway 335 and through filter 140 into region 345. In other embodiments, alternatively or in addition to filter 140, a filter can be arranged in bore 150 at gaseous fluid inlet 40, or can be external to conditioning module 10 upstream of the gaseous fluid inlet. Filter 140 in hollow core 325 can filter post-production debris that is still present in heat exchanger 20 after assembly and access from the top of conditioning module 10 makes it easier to replace the filter. Valve apparatus 30 is now described in more detail.

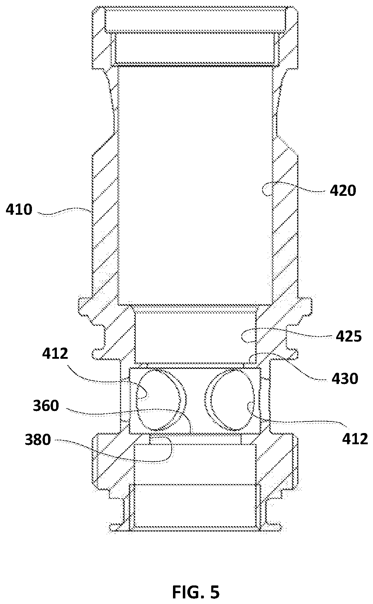

Valve 350 controls (regulates) the flow of gaseous fluid between process fluid outlet 320 (of the heat exchanger) and fluid outlet 50, thereby controlling the output pressure of the conditioning module. Valve 350 includes valve seat 360 and valve member 370 that is reciprocatable within annular housing 410. The valve is closed when valve member 370 abuts valve seat 360 and open when the valve member is displaced from the valve seat (that is, spaced apart from or lifted off the valve seat). In the illustrated embodiment valve seat 360 is an outer edge of bore 380 in annular housing 410 (seen in FIG. 5). Valve member 370 includes proximal member 372 (also known as a shutter) connected to/with distal member 374 (proximal and distal are with respect to valve seat 360). In other embodiments valve member 370 can be a unitary member. Valve apparatus 30 also includes mechanical biasing device 390 and coil 400. In the illustrated embodiment biasing device 390 is a helical compression spring that biases valve member 370 towards valve seat 360. Distal member 374 includes recessed portion 376 (for example a bore) into which spring 390 extends, that serves as a spring guide/support and/or as a means to reduce the longitudinal size of conditioning module 10. Coil 400 is an annularly-wound wire (for example on a bobbin) electrically connected with the electrical input (not shown) and when energized by the driver (not shown) forms an electromagnet that can displace valve member 370 away from valve seat 360. Distal member 374 is made of a ferromagnetic material such that it is susceptible to the electromagnetic field created by the electromagnet. Proximal member 372 may also be made of ferromagnetic material. Alternatively, or additionally, proximal member 372 can be composed of a material that has improved sealing capabilities compared to ferromagnetic materials, for example member 372 can be made of rubber. Gaseous fluid flows from process fluid outlets 320 through filter 140 into region 345 towards valve 350. When valve 350 is operated as a proportional valve, the electronic controller (not shown) commands the driver (not shown) to energize coil 400 to control the amount of lift of valve member 370 from valve seat 360 thereby controlling the fluid flow area through valve 350 and gaseous fluid output pressure. Alternatively, when valve 350 is operated as an injector-type valve, the electronic controller commands the driver to adjust the frequency and/or duty cycle of a pulse width modulated signal that moves valve member 370 between open and closed positions to control the injection of fuel from the upstream side of valve 350 to the downstream side of the valve and thereby the gaseous fluid output pressure. Downstream of valve 350, gaseous fluid flows through openings 412 (for example, bores) in annular housing 410 into annular chamber 414 and then through gaseous fluid outlet 50.

With reference to FIGS. 2 and 4, inner surface 420 of annular housing 410 and annular seal 470 support and guide valve member 370 during reciprocation. In the illustrated embodiment, surface 420 supports and guides a larger diameter portion of distal member 374 and annular seal 470 supports and guides a smaller diameter portion of distal member 374. Surface 430 of annular housing 310 is a radial surface in the illustrated embodiment relative to axis 15 and supports and retains annular seal 470 within the annular housing during reciprocation of valve member 370. End cap 440 supports spring 390 and forms a fluidly sealed connection with housing 410 by way of seal 445. Referring to FIGS. 2, 3 and 5, compensation chamber 450 is the space defined by end cap 440, inner surfaces 420 and 425 of housing 410 and annular seal 470. Spring 390 is situated in compensation chamber 450 and valve member 370 extends and reciprocates therein. Compensation chamber 450 includes a proximal chamber 452 and a distal chamber 454 (proximal and distal are with respect to valve seat 360). Passageway 460 extends longitudinally through valve member 370 (through both proximal and distal members 372 and 374 respectively) from region 345 to distal chamber 454. Radial passageways 462 extend from passageway 460 to proximal chamber 452. Passageways 460 and 462 fluidly connect chamber 450 with the upstream side of valve 350, which is the high(er) pressure side of the valve, such that chamber 450 is substantially at tank pressure when the valve is closed. Chamber 450 is also fluidly connected with fluid outlet 50 (at system pressure) when valve 350 is open; however, the pressure in the chamber remains substantially at tank pressure due to the restricted flow area through the valve. Seal 470 provides a fluidly sealing connection between valve member 370 and inner surface 425 whereby fluid can only be communicated into and/or out of chamber 450 along passageways 460 and 462. It is possible that gaseous fluid flows between proximal chamber 452 to distal chamber 454 through the space between inner surface 420 of annular housing 410 and distal portion 374 of valve member 370, for example to neutralize any pressure differences along the way. However, the flow area therebetween is substantially less than the flow area provided by passageways 460 and 462.

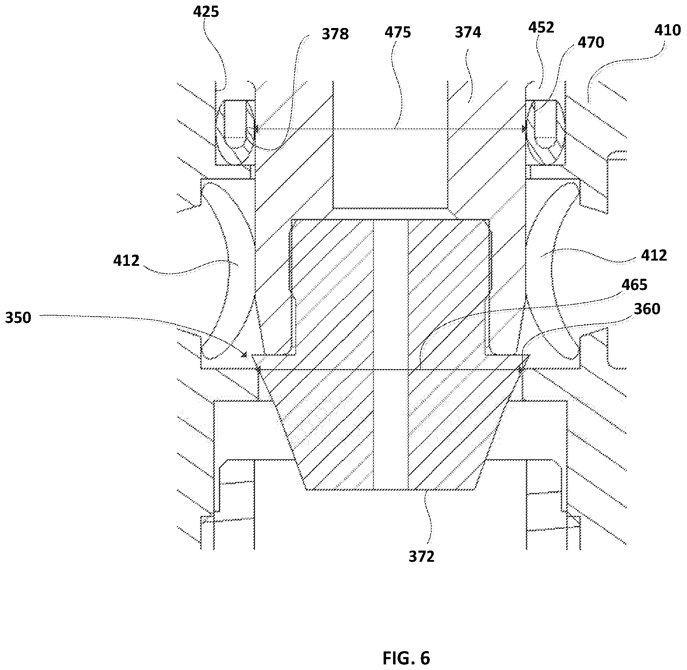

Referring now to FIGS. 2, 5 and 6, valve member 370 is compensated with respect to gaseous fluid pressure upstream of valve 350 since it experiences fluid forces resulting from gaseous fluid inlet pressure (for example, tank pressure) at opposite ends in opposite directions. As used herein, both valve 350 and valve member 370 are referred to as being compensated. Gaseous fluid upstream of valve 350, substantially at tank pressure, exerts longitudinal forces with respect to axis 15 on a first area of valve member 370 in chamber 450 in a direction towards valve seat 360 and longitudinal forces on a second area of the valve member outside the chamber in a direction away from the valve seat. These are counterposing longitudinal forces. The first area in chamber 450 is defined by sealing diameter 475 of seal 470 at outer surface 378 of distal member 374 (seen in FIG. 6). The second area is defined by valve seat diameter 465 of valve seat 360. Sealing diameter 475 is also referred to as a critical diameter in compensation chamber 450 where gaseous fluid pressure generates a longitudinal closing force on the valve member, and valve seat diameter 465 is also referred to as a critical diameter outside the compensation chamber where gaseous fluid pressure generates a longitudinal opening force on the valve member. In the illustrated embodiment, sealing diameter 475 is greater than valve seat diameter 465, such that the first area in chamber 450 is larger than the second area outside the chamber, whereby the net longitudinal force on valve member 370 resulting from gaseous fluid pressure is towards valve seat 360. In this manner valve 350 (or valve member 370) is said to be over-compensated such that when coil 400 (the electromagnet) is de-energized valve 350 closes.

Spring 390 is not required to close valve 350 when valve 350 is over-compensated, although the spring can help prevent any unintended valve openings due to transient pressure waves within conditioning module 10 and can maintain the valve closed in the absence of gaseous fluid and coil energization. Spring 390 can be selected for a much smaller force since it does not need to close valve 350 against maximum tank pressure. In other embodiments, sealing diameter 475 can be equal to valve seat diameter 465 such that the first area in chamber 450 is equal to the second area outside the chamber whereby the net longitudinal forces resulting from gaseous fluid pressure is zero and valve member 370 is not influenced in the static condition by gaseous fluid pressure. This is referred to as balanced-compensation. Alternatively, sealing diameter 475 can be less than valve seat diameter 465 such that the first area in chamber 450 is smaller than the second area outside the chamber whereby the net longitudinal force due to gaseous fluid pressure urges the valve member away from valve seat 360. This is referred to as under-compensation. Spring 390 closes valve 350 when coil 400 is de-energized for both the balanced-compensation and under-compensation embodiments. In all three compensation embodiments (over, balanced and under) it is the longitudinal forces exerted on the first area of valve member 370 in chamber 450 that compensates the valve member against gaseous fluid pressure (that is, inlet pressure or tank pressure). A magnitude of the difference between the first area and the second area can be selected such that a spring rate of spring 390 can be relatively small. As used herein, the spring rate is defined as the amount of force required to deflect a spring one unit of distance. An advantage in compensating valve member 370 against tank pressure is the improvement in the ability to electronically control the valve member to regulate output pressure of the conditioning module, especially when input pressure is not constant but varies between a relatively wide range, such as when conditioning a gaseous fuel in a storage tank for an internal combustion engine. Pre-tension of spring 390 can be chosen such that valve 350 is closed at any possible/allowable tank pressure when coil 400 is not energized. For situations of over-compensation and balanced-compensation, the pre-tension can be small or zero, thus requiring less maximum electromagnetic force to move valve member 370. When over-compensation pre-tension is too high, then the required electromagnetic force becomes too high in the situation of high tank pressure. When under-compensation pre-tension is too high, then the required electromagnetic force becomes too high in the situation of low tank pressure. Both situations can negatively influence the performance of the electromagnetic valve, for example the non-linear behavior of the valve, whether the valve is not fully opening or not opening at all.

An alternative embodiment is now discussed. First, with reference to FIG. 2, in the illustrated embodiment heat exchanger 20 is longitudinally adjacent valve apparatus 30. In other embodiments the heat exchanger can longitudinally overlap at least a portion of the valve apparatus such that heat rejection takes place from the heat exchange fluid to the gaseous fluid both upstream and downstream of valve 350. For example, gaseous fluid outlet 50 and receptacle 120 can be moved upwardly such that tubular middle member 200 can extend beyond valve 350 in an overlapping manner. Heat exchange fluid inlet 60 can also be moved longitudinally concomitantly with the extension of middle member 200. In still further embodiments heat exchanger 20 can be located downstream of valve apparatus 30. It is preferred to locate the heat exchanger either upstream or in an overlapping manner with respect to valve 350 of the valve apparatus.

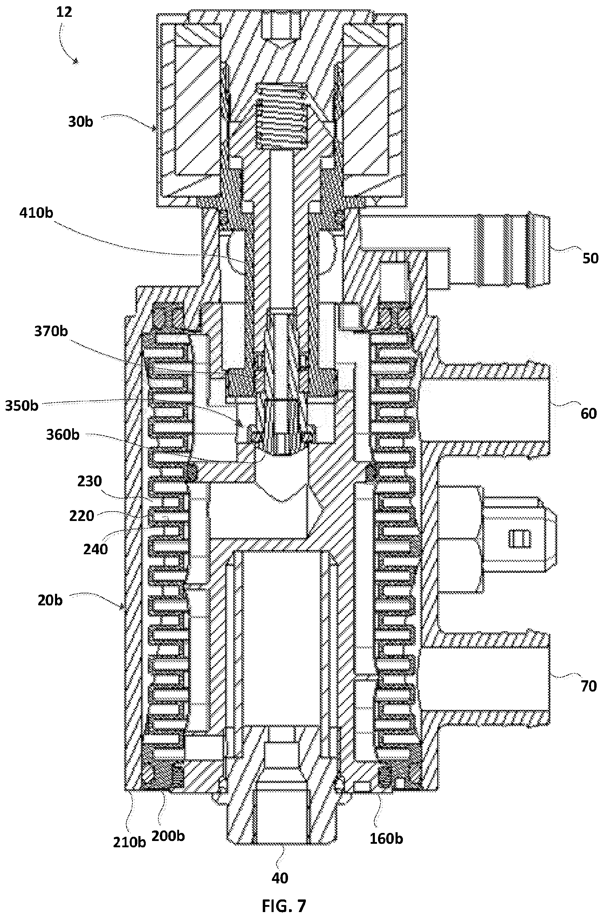

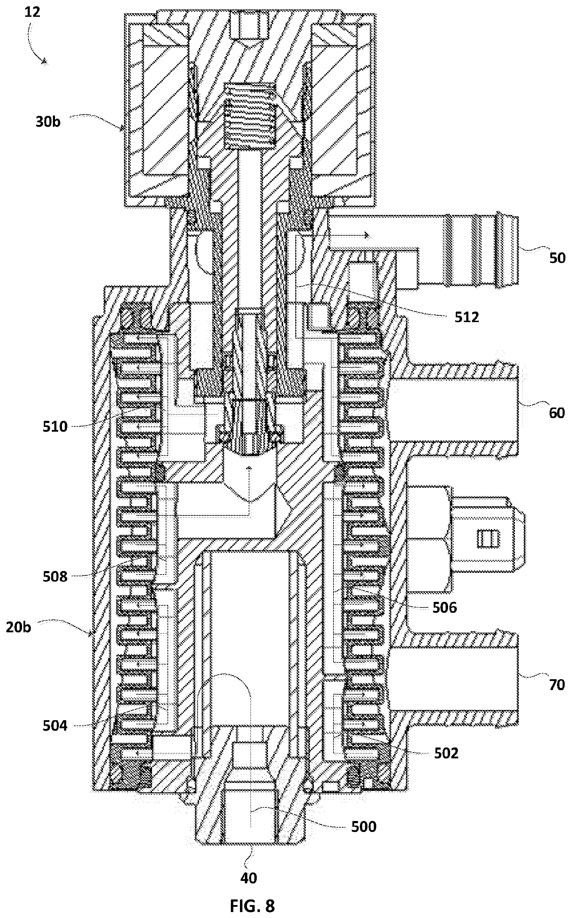

Referring now to FIG. 7, there is shown gaseous fluid conditioning module 12 according to a second embodiment, where like parts to the first embodiment have like reference numerals that may not be described in detail, if at all. Heat exchanger 20b overlaps electromagnetic valve apparatus 30b such that heat rejection between the heat exchange fluid and gaseous fluid takes place both upstream and downstream of valve 350. Heat exchanger 20b includes inner member 160b disposed within tubular middle member 200b and surrounded by body 210b of the conditioning module, all of which cooperate to control the flow of gaseous fluid and heat exchange fluid to within relatively close proximity of each other to facilitate heat rejection from the heat exchange fluid to the gaseous fluid. Tubular middle member 200b extends longitudinally along valve 350b in an overlapping manner. Valve member 370b reciprocates within annular housing 410b relative to valve seat 360b. With reference to FIG. 8, the flow path of gaseous fluid from inlet 40 to outlet 50 is illustrated by way of flow lines 500, 502, 504, 506, 508, 510 and 512 in increasingly downstream order respectively.

There are advantages and disadvantages to locating the heat exchanger both upstream and downstream of valve apparatus 30. When the valve is placed before the heat exchanger, the valve regulates the gaseous fluid in the liquid phase and issues of delayed response and cut-off pressure are present. There is a delayed response in pressure regulation since the liquid phase fluid must pass through the valve and then be vaporized before having a significant effect on outlet pressure, and in this sense the system lags behind and is more difficult to regulate. When the engine goes into a fuel cut-off mode, such as when the throttle is released, the valve closes but there is still liquid phase gaseous fluid downstream from the valve that vaporizes and can cause an over-pressure condition known as 'cut-off pressure'. When the valve is placed after the heat exchanger, the liquid phase gaseous fluid is much more difficult to heat and vaporize because the boiling point is higher before the valve due to the higher pressure. This makes the heat exchanger more efficient after the valve, and less efficient before the valve. Also, due to the Joule-Thomson effect, the temperature drops after the valve. This makes the differential temperature between the heat exchanger and the gaseous fluid larger. Heat transfer is linearly dependent on the differential temperature, and thus this allows more heat to be transferred to the gaseous fluid. The heat exchanger can theoretically only heat the gaseous fluid up to the temperature of the heat exchange fluid. The Joule-Thomson effect of the valve then reduces the gaseous fluid temperature. In cold conditions, hoses can reduce the gaseous fluid temperature even further causing the gaseous fluid to reach its condensation point downstream of the conditioning module, which can lead to overpressure conditions and/or incorrect amount of gaseous fluid injected into the engine manifold.

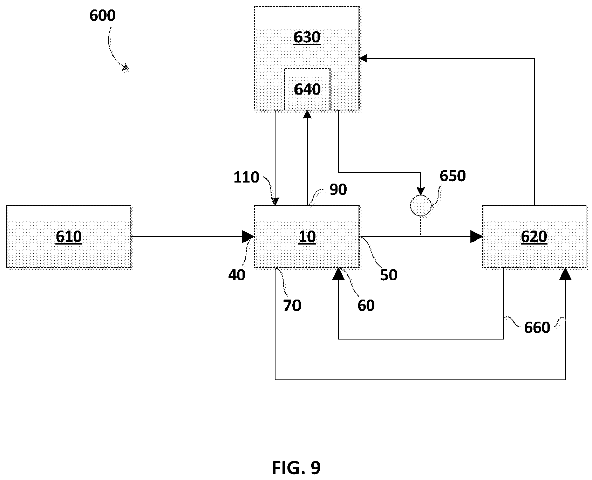

Referring now to FIG. 9 there is shown engine system 600 including gaseous fluid conditioning module 10, storage apparatus 610, engine 620 and electronic controller 630. Although gaseous fluid conditioning module 10 is illustrated in system 600, in other system embodiments module 12 can be employed. The gaseous fluid is a gaseous fuel, such as LPG that is consumed by engine 620 as it operates. Storage apparatus 620 includes a tank that stores the gaseous fluid in the liquid phase at standard temperature and can include other conventional fuel system components such as shut-off and safety valves. Engine 620 circulates engine coolant to conditioning module 10 through loop 660 to vaporize the gaseous fluid received from storage apparatus 610. Electronic controller 630 includes driver 640 that is electrically connected with the electromagnetic valve apparatus of conditioning module 10 at electrical input 90. In other embodiments driver 640 can be external to the controller. Controller 630 is also operatively connected with engine 620 to receive signals representative of engine operating conditions and to command fuel injectors (not shown) to introduce (either directly or indirectly) gaseous fluid to the engine cylinders. Pressure sensor 650 generates signals representative of gaseous fluid pressure downstream from gaseous fluid outlet 50 and communicates these signals to controller 630. The controller also receives signals from temperature sensor 110 representative of engine coolant temperature within conditioning module 10. Controller 630 commands the electromagnetic valve apparatus in conditioning module 10 to regulate gaseous fluid outlet pressure (that is, system pressure) based on inputs of at least the gaseous fluid outlet pressure, and in an exemplary embodiment the engine coolant temperature as well. In other embodiments the controller can also receive signals representative of the gaseous fluid inlet pressure from another pressure sensor (not shown) that can be used to improve regulation of the outlet pressure.

## Claims

1. A gaseous fluid conditioning module (10, 12) comprising:
a gaseous fluid inlet (40) receiving a gaseous fluid at inlet pressure;
a gaseous fluid outlet (50) providing the gaseous fluid in a gas phase within a predetermined pressure range;
a valve apparatus (30, 30b) regulating flow of the gaseous fluid in the gas phase between the gaseous fluid inlet (40) and the gaseous fluid outlet (50), the valve apparatus (30, 30b) comprising:
a valve (350, 350b) comprising a valve seat (360, 360b) and a valve member (370, 370b) reciprocatable with respect to the valve seat (360, 360b) , the valve member (370, 370b) in fluid sealing contact with the valve seat (360, 360b) when the valve (350, 350b) is closed and spaced apart from the valve seat (360, 360b) when the valve (350, 350b) is open;
an electromagnet (400) energizable to exert a force on the valve member (370, 370b) to move the valve member (370, 370b) away from the valve seat (360, 360b) thereby opening the valve (350, 350b) to regulate the pressure of gaseous fluid downstream from the valve (350, 350b) within the predetermined pressure range; and
a compensation chamber (450) at a distal end of the valve member (370, 370b) opposite the valve seat (360, 360b) into which the valve member (370, 370b) extends, the compensation chamber (450) in fluid communication with the gaseous fluid inlet (40), the gaseous fluid upstream of the valve (350, 330b) exerting longitudinal forces on a first area of the valve member (370, 370b) in the compensation chamber (450) in the direction of the valve seat (360, 360b) and longitudinal forces on a second area of the valve member (370, 370b) outside the compensation chamber (450) away from the valve seat (360, 360b);
wherein the longitudinal forces exerted on the first area of the valve member (370, 370b) in the compensation chamber (450) compensate the valve member (370, 370b) against gaseous fluid inlet pressure,
the gaseous fluid conditioning module further comprising a heat exchanger (20) comprising a heat exchange fluid inlet (60), a heat exchange fluid outlet (70), a process fluid inlet (190) and a process fluid outlet (320); a heat exchange fluid employed to increase the enthalpy of the gaseous fluid entering by way of the heat exchange fluid inlet (60) and exiting by way of the heat exchange fluid outlet (70), the process fluid inlet (190) in fluid communication with the gaseous fluid inlet (60), and the valve apparatus (30, 30B) downstream from the process fluid outlet (320),
the gaseous fluid conditioning further comprising a body (210), the heat exchanger (20) further comprising a tubular middle member (200) within the body (210), the tubular middle member (210) comprising annular hollow ribs (220) protruding radially outwardly and abutting an inside surface of the body (210) thereby forming a plurality of annular passageways (230, 240) around the tubular middle member (200), the ribs (220) are spaced apart from the inside surface of the body (210) at an inlet region around the heat exchange fluid inlet (60), an outlet region around the heat exchange fluid outlet (60) and a longitudinal region at a side substantially opposite the heat exchange fluid inlet (60) and outlet (70), wherein heat exchange fluid flows from the heat exchange fluid inlet (60) into and through the annular passageways (230, 240) encompassed by the inlet region, then into and through a longitudinal passageway (300) at the longitudinal region, then into and through the annular passageways (335) encompassed by the outlet region and then into the heat exchange fluid outlet (70).

2. The gaseous fluid conditioning module of claim 1, wherein the first area is larger than the second area, whereby the longitudinal forces exerted by the gaseous fluid upstream of the valve (350, 350b) on the first area of the valve member (370, 370b) are greater than the longitudinal forces exerted by the gaseous fluid on the second area of the valve member (370, 370b) whereby the valve (350, 350b) closes when the electromagnet (400) is de-energized; or
the first area is equal to or smaller than the second area, whereby the longitudinal forces exerted by the gaseous fluid on the first area of the valve member (370, 370b) are equal to or less than the longitudinal forces exerted by the gaseous fluid on the second area of the valve member (370, 370b).

3. The gaseous fluid conditioning module of claim 1 or 2, further comprising a mechanical biasing device (390) urging the valve member (370, 370b) to the valve seat (360, 360b).

4. The gaseous fluid conditioning module of any of claims 1 to 3, the heat exchanger (20) further comprising a spiral passageway (310) extending between the process fluid inlet (190) and the process fluid outlet (320), the spiral passageway (310) increasing in cross-sectional flow area in the direction of the process fluid outlet (320).

5. The gaseous fluid conditioning module of claim 4, the heat exchanger (20) further comprising an inner member (160) within the tubular middle member (200), the inner member (160) comprising a rib protruding radially outwardly and spirally wound around the inner member (160), the rib abutting an inside surface of the tubular middle member (200) forming the spiral passageway (310), the inner member (160) tapering longitudinally whereby the cross-sectional flow area of the spiral passageway (310) increases in the direction of the process fluid outlet (320).

6. The gaseous fluid conditioning module of claim 5, the inner member (160) comprising a longitudinal bore at one end, further comprising a tubular filter inserted in the bore, gaseous fluid in communication between the gaseous fluid inlet (40) and the process fluid inlet (190) through the filter.

7. The gaseous fluid conditioning module of any of claims 1 to 6, wherein the electromagnet (400) comprises an annular coil pack extending around the valve member (370, 370b); or
the electromagnet (400) can be adjustably energized to adjust the flow area through the valve (350, 350b); or
further comprising a receptacle (100, 120) in fluid communication with the gaseous fluid outlet (50), the receptacle (100, 120) receiving at least one of a pressure relief valve (130), a temperature sensor (110), a pressure sensor (650) and a gaseous fluid conduit.

8. The gaseous fluid conditioning module of any of claims 1 to 7, wherein the gaseous fluid is any gaseous fluid or mixtures thereof having a critical temperature above 21 degrees Celsius; or
the gaseous fluid is one of propane, butane, dimethyl ether, LPG and mixtures of these gaseous fluids.

9. An engine system (600) comprising:
a gaseous fluid storage apparatus (610);
a gaseous fluid conditioning module (10, 12) as claimed in claim 1 fluidly connected to receive gaseous fluid from the gaseous fluid storage apparatus (610);
an engine (620) fluidly connected to receive gaseous fluid from and to supply engine coolant to the gaseous fluid conditioning module (10, 12);
a pressure sensor (650) measuring gaseous fluid pressure between the gaseous fluid conditioning module (10, 12) and the engine (620); and
a controller (630) operatively connected with the gaseous fluid conditioning module (10, 12), the engine (620) and the pressure sensor (650) and programmed to command the gaseous fluid conditioning module (10, 12) to regulate the gaseous fluid pressure between the gaseous fluid conditioning module (10, 12) and the engine (600) within a predetermined pressure range and to adjust the predetermined pressure range based on engine operating conditions.

## Patentansprüche

1. Modul (10, 12) zur Konditionierung von gasförmigen Fluiden, umfassend: einen Einlass (40) für gasförmige Fluide zum Empfangen eines gasförmigen Fluids bei einem Einlassdruck; einen Auslass (50) für gasförmige Fluide, der das gasförmige Fluid in einer Gasphase innerhalb eines vorbestimmten Druckbereichs bereitstellt; eine Ventilvorrichtung (30, 30b), die die Strömung des gasförmigen Fluids in der Gasphase zwischen dem Einlass (40) für gasförmigee Fluide und dem Auslass (50) für gasförmige Fluide regelt, wobei die Ventilvorrichtung (30, 30b) Folgendes umfasst: ein Ventil (350, 350b), umfassend einen Ventilsitz (360, 360b) und ein Ventilelement (370, 370b), das in Bezug auf den Ventilsitz (360, 360b) hin- und herbewegbar ist, wobei das Ventilelement (370, 370b) in Fluiddichtkontakt mit dem Ventilsitz (360, 360b) steht, wenn das Ventil (350, 350b) geschlossen ist, und vom Ventilsitz (360, 360b) beabstandet ist, wenn das Ventil (350, 350b) geöffnet ist; einen Elektromagneten (400), der erregbar ist, um eine Kraft auf das Ventilelement (370, 370b) auszuüben, um das Ventilelement (370, 370b) vom Ventilsitz (360, 360b) weg zu bewegen, wodurch das Ventil (350, 350b) geöffnet wird, um den Druck des gasförmigen Fluids stromabwärts des Ventils (350, 350b) innerhalb des vorbestimmten Druckbereichs zu regeln; und eine Ausgleichskammer (450) an einem fern gelegenen Ende des Ventilelements (370, 370b) gegenüber dem Ventilsitz (360, 360b), in den sich das Ventilelement (370, 370b) erstreckt, wobei die Ausgleichskammer (450) mit dem Einlass (40) für gasförmige Fluide in Fluidverbindung steht, das gasförmige Fluid stromaufwärts des Ventils (350, 330b) Längskräfte auf einen ersten Bereich des Ventilelements (370, 370b) in der Ausgleichskammer (450) in Richtung des Ventilsitzes (360, 360b) und Längskräfte auf einen zweiten Bereich des Ventilelements (370, 370b) außerhalb der Ausgleichskammer (450) weg vom Ventilsitz (360, 360b) ausübt; wobei die Längskräfte, die auf den ersten Bereich des Ventilelements (370, 370b) in der Ausgleichskammer (450) ausgeübt werden, das Ventilelement (370, 370b) gegen den Einlassdruck des gasförmigen Fluids ausgleichen, wobei das Modul zur Konditionierung von gasförmigen Fluiden ferner umfasst: einen Wärmetauscher (20) mit einem Wärmetauschfluideinlass (60), einem Wärmetauschfluidauslass (70), einem Prozessfluideinlass (190) und einem Prozessfluidauslass (320); ein Wärmetauschfluid, das dazu verwendet wird, die Enthalpie des gasförmigen Fluids zu erhöhen, das durch den Wärmetauschfluideinlass (60) eintritt und durch den Wärmetauschfluidauslass (70) austritt, wobei der Prozessfluideinlass (190) in Fluidverbindung mit dem Einlass (60) des gasförmigen Fluids steht, und die Ventilvorrichtung (30, 30B) stromabwärts des Prozessfluidauslasses (320), wobei das Modul zur Konditionierung von gasförmigen Fluiden ferner umfasst: einen Körper (210), wobei der Wärmetauscher (20) ferner ein röhrenförmiges Mittelelement (200) innerhalb des Körpers (210) umfasst, wobei das röhrenförmige Mittelelement (210) ringförmige Hohlrippen (220) umfasst, die radial nach außen vorstehen und an einer Innenfläche des Körpers (210) anliegen, wodurch sich eine Vielzahl von ringförmigen Durchlässen (230, 240) um das röhrenförmige Mittelelement (200) bilden, wobei die Rippen (220) von der Innenfläche des Körpers (210) in einem Einlassbereich um den Wärmetauschfluideinlass (60) beabstandet sind, einen Auslassbereich um den Wärmetauschfluidauslass (60) und einen Längsbereich an einer dem Wärmetauschfluideinlass (60) und -auslass (70) im Wesentlichen gegenüberliegenden Seite, wobei Wärmetauschfluid vom Wärmetauschfluideinlass (60) in und durch die vom Einlassbereich umgebenen ringförmigen Durchlässe (230, 240), danach in und durch einen Längsdurchgang (300) am Längsbereich, danach in und durch die vom Auslassbereich umgebenen ringförmigen Durchlässe (335) und danach in den Wärmetauschfluidauslass (70) fließt.

2. Modul zur Konditionierung von gasförmigen Fluiden gemäß Anspruch 1, wobei der erste Bereich größer als der zweite Bereich ist, wodurch die durch das gasförmige Fluid stromaufwärts des Ventils (350, 350b) auf den ersten Bereich des Ventilelements (370, 370b) ausgeübten Längskräfte größer als die durch das gasförmige Fluid auf den zweiten Bereich des Ventilelements (370, 370b) ausgeübten Längskräfte sind, wodurch sich das Ventil (350, 350b) schließt, wenn der Elektromagnet (400) stromlos ist; oder
der erste Bereich gleich oder kleiner als der zweite Bereich ist, wodurch die durch das gasförmige Fluid auf den ersten Bereich des Ventilelements (370, 370b) ausgeübten Längskräfte gleich oder kleiner als die durch das gasförmige Fluid auf den zweiten Bereich des Ventilelements (370, 370b) ausgeübten Längskräfte sind.

3. Modul zur Konditionierung von gasförmigen Fluiden gemäß Anspruch 1 oder 2, ferner umfassend eine mechanische Vorspannvorrichtung (390), die das Ventilelement (370, 370b) an den Ventilsitz (360, 360b) drückt.

4. Modul zur Konditionierung von gasförmigen Fluiden gemäß einem der Ansprüche 1 bis 3, wobei der Wärmetauscher (20) ferner einen spiralförmigen Durchgang (310) umfasst, der sich zwischen dem Prozessfluideinlass (190) und dem Prozessfluidauslass (320) erstreckt, wobei die Strömungsquerschnittsfläche des spiralförmigen Durchgangs (310) in Richtung des Prozessfluidauslasses (320) zunimmt.

5. Modul zur Konditionierung von gasförmigen Fluiden gemäß Anspruch 4, wobei der Wärmetauscher (20) ferner ein Innenelement (160) innerhalb des röhrenförmigen Mittelelements (200) umfasst, wobei das Innenelement (160) eine Rippe umfasst, die radial nach außen vorsteht und spiralförmig um das Innenelement (160) gewickelt ist, wobei die Rippe an einer Innenfläche des röhrenförmigen Mittelelements (200) anliegt, die den spiralförmigen Durchgang (310) bildet, wobei sich das Innenelement (160) in Längsrichtung verjüngt, wodurch die Strömungsquerschnittsfläche des spiralförmigen Durchgangs (310) in Richtung des Prozessfluidauslasses (320) zunimmt.

6. Modul zur Konditionierung von gasförmigen Fluiden gemäß Anspruch 5, wobei das Innenelement (160) an einem Ende eine Längsbohrung umfasst und ferner einen in die Bohrung eingesetzten röhrenförmigen Filter umfasst, wobei das gasförmige Fluid durch den Filter in Fluidverbindung zwischen dem Einlass (40) für das gasförmige Fluid und dem Einlass (190) für das Prozessfluid steht.

7. Modul zur Konditionierung von gasförmigen Fluiden gemäß einem der Ansprüche 1 bis 6, wobei der Elektromagnet (400) ein ringförmiges Spulenpaket umfasst, das sich um das Ventilelement (370, 370b) erstreckt; oder
der Elektromagnet (400) einstellbar erregt werden kann, um die Strömungsfläche durch das Ventil (350, 350b) einzustellen; oder
ferner umfassend eine Aufnahme (100, 120) in Fluidverbindung mit dem Auslass (50) für das gasförmige Fluid, wobei die Aufnahme (100, 120) mindestens eines von einem Überdruckventil (130), einem Temperatursensor (110), einem Drucksensor (650) und einer Leitung für gasförmige Fluide empfängt.

8. Modul zur Konditionierung von gasförmigen Fluiden gemäß einem der Ansprüche 1 bis 7, wobei das gasförmige Fluid ein beliebiges gasförmiges Fluid oder Gemischen daraus ist, das eine kritische Temperatur von über 21 Grad Celsius aufweist; oder
das gasförmige Fluid eines von Propan, Butan, Dimethylether, LPG und Gemischen dieser gasförmigen Fluide ist.

9. Verbrennungsmotorsystem (600), umfassend:
eine Vorrichtung (610) zum Speichern von gasförmigen Fluiden;
ein Modul (10, 12) zur Konditionierung von gasförmigen Fluiden gemäß Anspruch 1, das fluidmäßig dazu verbunden ist, gasförmiges Fluid aus der Vorrichtung (610) zum Speichern von gasförmigen Fluiden zu empfangen;
einen Verbrennungsmotor (620), der fluidmäßig dazu verbunden ist, gasförmiges Fluid aus dem Modul (10, 12) zur Konditionierung von gasförmigen Fluiden zu empfangen und diesem Motorkühlmittel zuzuführen;
einen Drucksensor (650), der den Druck des gasförmigen Fluids zwischen dem Modul (10, 12) zur Konditionierung von gasförmigen Fluiden und dem Verbrennungsmotor (620) misst; und
eine Steuervorrichtung (630), die betriebsmäßig mit dem Modul (10, 12) zur Konditionierung von gasförmigen Fluiden, dem Verbrennungsmotor (620) und dem Drucksensor (650) verbunden und dazu programmiert ist, dem Modul (10, 12) zur Konditionierung von gasförmigen Fluiden zu befehlen, den Druck des gasförmigen Fluids zwischen dem Modul (10, 12) zur Konditionierung von gasförmigen Fluiden und dem Verbrennungsmotor (600) innerhalb eines vorbestimmten Druckbereichs zu regeln und den vorbestimmten Druckbereich basierend auf den Betriebsbedingungen des Verbrennungsmotors anzupassen.

## Revendications

1. Module de conditionnement de fluide gazeux (10, 12) comprenant : une entrée de fluide gazeux (40) recevant un fluide gazeux à une pression d'entrée ; une sortie de fluide gazeux (50) fournissant le fluide gazeux en phase gazeuse dans une plage de pression prédéterminée ; un appareil à soupape (30, 30b) régulant l'écoulement du fluide gazeux en phase gazeuse entre l'entrée du fluide gazeux (40) et la sortie du fluide gazeux (50), l'appareil à soupape (30, 30b) comprenant : une soupape (350, 350b) comprenant un siège de soupape (360, 360b), et un élément de soupape (370, 370b) pouvant effectuer un mouvement de va-et-vient par rapport au siège de soupape (360, 360b), l'élément de soupape (370, 370b) étant en contact étanche aux fluides avec le siège de soupape (360, 360b) lorsque la soupape (350, 350b) est fermée et étant espacé du siège de soupape (360, 360b) lorsque la soupape (350, 350b) est ouverte ; un électroaimant (400) excitable pour exercer une force sur l'élément de soupape (370, 370b) afin d'éloigner l'élément de soupape (370, 370b) du siège de soupape (360, 360b), ouvrant ainsi la soupape (350, 350b) afin de réguler la pression du fluide gazeux en aval de la soupape (350, 350b) dans la plage de pression prédéterminée ; et une chambre de compensation (450) à une extrémité distale de l'élément de soupape (370, 370b) à l'opposé du siège de soupape (360, 360b) dans laquelle l'élément de soupape (370, 370b) s'étend, la chambre de compensation (450) étant en communication fluidique avec l'entrée du fluide gazeux (40), le fluide gazeux en amont de la soupape (350, 330b) exerçant des forces longitudinales sur une première zone de l'élément de soupape (370, 370b) dans la chambre de compensation (450) en direction du siège de soupape (360, 360b) et exerçant des forces longitudinales sur une seconde zone de l'élément de soupape (370, 370b) à l'extérieur de la chambre de compensation (450) à l'écart du siège de soupape (360, 360b) ; dans lesquelles les forces longitudinales exercées sur la première zone de l'élément de soupape (370, 370b) dans la chambre de compensation (450) compensent l'élément de soupape (370, 370b) par rapport à la pression d'entrée du fluide gazeux, le module de conditionnement de fluide gazeux comprenant en outre un échangeur de chaleur (20) comprenant une entrée de fluide d'échange de chaleur (60), une sortie de fluide d'échange de chaleur (70), une entrée de fluide de traitement (190) et une sortie de fluide de traitement (320) ; un fluide d'échange de chaleur étant employé pour augmenter l'enthalpie du fluide gazeux entrant par l'entrée du fluide d'échange de chaleur (60) et sortant par la sortie du fluide d'échange de chaleur (70), l'entrée du fluide de traitement (190) étant en communication fluidique avec l'entrée du fluide gazeux (60), et l'appareil à soupape (30, 30B) en aval de la sortie du fluide de traitement (320), le module de conditionnement de fluide gazeux comprenant en outre un corps (210), l'échangeur de chaleur (20) comprenant en outre un élément central tubulaire (200) à l'intérieur du corps (210), l'élément central tubulaire (210) comprenant des nervures creuses annulaires (220) faisant saillie radialement vers l'extérieur et venant buter contre une surface intérieure du corps (210), formant ainsi une pluralité de passages annulaires (230, 240) autour de l'élément central tubulaire (200), les nervures (220) étant espacées de la surface intérieure du corps (210) au niveau d'une région d'entrée autour de l'entrée de fluide d'échange de chaleur (60), d'une région de sortie autour de la sortie de fluide d'échange de chaleur (60) et d'une région longitudinale sur un côté sensiblement opposé à l'entrée (60) et à la sortie (70) de fluide d'échange de chaleur, dans lequel le fluide d'échange de chaleur s'écoule de l'entrée de fluide d'échange de chaleur (60) dans et à travers les passages annulaires (230, 240) entourés par la région d'entrée, puis dans et à travers un passage longitudinal (300) au niveau de la région longitudinale, puis dans et à travers les passages annulaires (335) entourés par la région de sortie et ensuite dans la sortie de fluide d'échange de chaleur (70).

2. Module de conditionnement de fluide gazeux de la revendication 1, dans lequel la première zone est plus grande que la seconde zone, moyennant quoi les forces longitudinales exercées par le fluide gazeux en amont de la soupape (350, 350b) sur la première zone de l'élément de soupape (370, 370b) sont supérieures aux forces longitudinales exercées par le fluide gazeux sur la seconde zone de l'élément de soupape (370, 370b), moyennant quoi la soupape (350, 350b) se ferme lorsque l'électroaimant (400) est désexcité ; ou
la première zone est égale ou inférieure à la seconde zone, moyennant quoi les forces longitudinales exercées par le fluide gazeux sur la première zone de l'élément de soupape (370, 370b) sont égales ou inférieures aux forces longitudinales exercées par le fluide gazeux sur la seconde zone de l'élément de soupape (370, 370b).

3. Module de conditionnement de fluide gazeux de la revendication 1 ou 2, comprenant en outre un dispositif de sollicitation mécanique (390) qui presse l'élément de soupape (370, 370b) vers le siège de soupape (360, 360b).

4. Module de conditionnement de fluide gazeux de l'une quelconque revendication 1 à 3, l'échangeur de chaleur (20) comprenant en outre un passage en spirale (310) s'étendant entre l'entrée du fluide de traitement (190) et la sortie du fluide de traitement (320), le passage en spirale (310) augmentant en section d'écoulement transversale en direction de la sortie du fluide de traitement (320).

5. Module de conditionnement de fluide gazeux de la revendication 4, l'échangeur de chaleur (20) comprenant en outre un élément interne (160) à l'intérieur de l'élément central tubulaire (200), l'élément interne (160) comprenant une nervure faisant saillie radialement vers l'extérieur et s'enroulant en spirale autour de l'élément interne (160), la nervure venant butter contre une surface intérieure de l'élément central tubulaire (200) formant le passage en spirale (310), l'élément interne (160) s'effilant longitudinalement, moyennant quoi la section d'écoulement transversale du passage en spirale (310) augmente en direction de la sortie du fluide de traitement (320).

6. Module de conditionnement de fluide gazeux de la revendication 5, l'élément interne (160) comprenant un alésage longitudinal à une extrémité, comprenant en outre un filtre tubulaire inséré dans l'alésage, le fluide gazeux étant en communication entre l'entrée du fluide gazeux (40) et l'entrée du fluide de traitement (190) à travers le filtre.

7. Module de conditionnement de fluide gazeux de l'une quelconque des revendications 1 à 6, dans lequel l'électroaimant (400) comprend un bloc de bobinage annulaire s'étendant autour de l'élément de soupape (370, 370b) ; ou
l'électroaimant (400) peut être excité de manière réglable pour régler la section d'écoulement à travers la soupape (350, 350b) ; ou
comprenant en outre un réceptacle (100, 120) en communication fluidique avec la sortie du fluide gazeux (50), le réceptacle (100, 120) recevant au moins l'un d'une soupape de décharge (130), d'un capteur de température (110), d'un capteur de pression (650) et d'une conduite de fluide gazeux.

8. Module de conditionnement de fluide gazeux de l'une quelconque des revendications 1 à 7, dans lequel le fluide gazeux est un fluide gazeux quelconque ou des mélanges de fluides gazeux dont la température critique est supérieure à 21 degrés Celsius ; ou
le fluide gazeux est l'un du propane, du butane, de l'éther diméthylique, du GPL et des mélanges de ces fluides gazeux.

9. Système de moteur (600) comprenant :
un appareil de stockage de fluide gazeux (610) ;
un module de conditionnement de fluide gazeux (10, 12) tel que revendiqué dans la revendication 1, relié fluidiquement pour recevoir le fluide gazeux de l'appareil de stockage de fluide gazeux (610) ;
un moteur (620) relié fluidiquement pour recevoir le fluide gazeux du module de conditionnement de fluide gazeux (10, 12) et pour délivrer du liquide de refroidissement de moteur au module de conditionnement de fluide gazeux (10, 12) ;
un capteur de pression (650) mesurant la pression de fluide gazeux entre le module de conditionnement de fluide gazeux (10, 12) et le moteur (620) ; et
un dispositif de commande (630) relié de manière opérationnelle au module de conditionnement de fluide gazeux (10, 12), au moteur (620) et au capteur de pression (650), et programmé pour commander au module de conditionnement de fluide gazeux (10, 12) de réguler la pression de fluide gazeux entre le module de conditionnement de fluide gazeux (10, 12) et le moteur (600) dans une plage de pression prédéterminée et pour régler la plage de pression prédéterminée en fonction des conditions de fonctionnement du moteur.
